# FASCICULE DE BREVET EUROPEEN

(11) **EP 3 670 282 B1**
(45) Date de publication et mention de la délivrance du brevet: **09.11.2022**
(21) Numéro de dépôt: 19216817.7
(22) Date de dépôt: 17.12.2019
(51) Int. Cl.: B60W 30/14, B60W 50/08, B60W 50/10, B60W 50/00

(54) **PROCÉDÉ ET DISPOSITIF DE GESTION D'UN SYSTÈME D'AIDE À LA CONDUITE D'UN VÉHICULE ÉQUIPÉ D'UNE BOÎTE DE VITESSE MANUELLE**
STEUERUNGSVERFAHREN UND -VORRICHTUNG EINES FAHRERASSISTENZSYSTEMS FÜR EIN FAHRZEUG MIT HANDSCHALTGETRIEBE
METHOD AND DEVICE FOR MANAGING A SYSTEM FOR ASSISTING WITH THE DRIVING OF A VEHICLE PROVIDED WITH A MANUAL GEARBOX

(30) Priorité: 18.12.2018 FR 1873185
(43) Date de publication de la demande: 24.06.2020
(73) Titulaire: Renault s.a.s, 92100 Boulogne Billancourt (FR)
(72) Inventeur: GUEYE, Abdou-Salam, 91120 Palaiseau (FR)
(74) Mandataire: Renault Group

(56) Documents cités:
- EP-A2- 1 516 766
- DE-A1- 10 242 684
- DE-A1- 19 833 838

## Description

L'invention a pour objet un procédé et un dispositif de gestion d'un système d'aide à la conduite d'un véhicule équipé d'une boîte de vitesse manuelle.

Il est connu dans l'état de la technique d'utiliser un régulateur adaptatif de vitesse et/ou de distance (ACC - « Adaptive Cruise Control). Il s'agit d'un dispositif embarqué conçu pour maintenir une distance de sécurité avec le véhicule qui précède ou une vitesse prédéfinie tant qu'aucun véhicule lent ne vient se placer devant le véhicule. Ainsi, une fois qu'une vitesse a été sélectionnée, le conducteur peut relâcher la pédale d'accélérateur et la vitesse sélectionnée est maintenue. La vitesse du véhicule peut s'ajuster automatiquement jusqu'à ce que la distance de sécurité avec le véhicule qui précède corresponde au réglage de la distance de sécurité. Le véhicule maintient alors une distance constante par rapport au véhicule suivi jusqu'à ce que ce dernier adopte une vitesse supérieure à la vitesse sélectionnée ou sorte de la voie de circulation, auquel cas la vitesse du véhicule revient à la vitesse sélectionnée. La supervision classique du régulateur adaptatif de vitesse permet de déconnecter le régulateur, par exemple par une action du conducteur sur la pédale de freinage.

Elle permet également de passer dans un mode dit « override » selon une terminologie anglaise, qui correspond à un état du régulateur dans lequel le conducteur appui sur la pédale d'accélérateur pour passer temporairement au-dessus de la vitesse de consigne programmée par le régulateur, par exemple afin d'effectuer un dépassement. Dans ce cas, le régulateur n'est pas désactivé, mais la régulation est simplement neutralisée pour laisser la main au conducteur. Autrement dit, le régulateur ne freinera pas automatiquement pour maintenir l'espace avec le véhicule qui le précède et lorsque la pédale d'accélérateur est relâchée, la vitesse du véhicule revient à la vitesse sélectionnée, ou à une vitesse inférieure propre à maintenir la distance de sécurité sélectionnée.

Le document EP1356978A1 fait connaître ce mode dit «override» du régulateur, dans lequel le conducteur, en actionnant la pédale d'accélérateur est capable d'accélérer temporairement à une vitesse supérieure à la vitesse programmée par le régulateur adaptatif.

Le document EP1516766 montre un régulateur de vitesse pour véhicule à transmission manuelle avec une fonctionalité "override".

On a pu s'apercevoir que la supervision classique du régulateur adaptatif ne permet pas de gérer de façon satisfaisante les interactions entre le régulateur et le conducteur dans certains cas d'usage du véhicule, en particulier pour un véhicule équipé d'une boîte de vitesse manuelle, lors des phases de changement de rapport initiées par le conducteur.

Ainsi, sur un régulateur adaptatif de vitesse d'un véhicule équipé d'une boîte de vitesse manuelle, la décision prise par le conducteur d'effectuer un changement de rapport alors que le régulateur est activé, entraîne souvent la désactivation totale ou partielle de celui-ci. En effet, sur un véhicule équipé d'une boîte de vitesse manuelle, lorsque le rapport engagé n'est pas adapté à la vitesse du véhicule, il est de la responsabilité du conducteur d'adapter le rapport pour éviter que ce dernier soit en sous ou en surrégime. L'appui sur la pédale d'embrayage déconnectant la liaison mécanique du moteur aux roues, la transmission d'effort est interrompue, ce qui empêche la régulation de vitesse. C'est pour cette raison que le régulateur est partiellement, voire totalement désactivé lors d'un changement de rapport.

La nécessité d'effectuer un changement de rapport vient alors en conflit avec le maintien du mode « override » du régulateur adaptatif, dans lequel la régulation de la vitesse sélectionnée est neutralisée pour permettre au conducteur d'accélérer. Ainsi, si le régulateur est en mode « override » au moment du changement de rapport, l'appui sur la pédale d'embrayage pour changer le rapport de vitesse a pour conséquence la désactivation partielle ou totale de ce mode. En effet, la détermination du mode « override » est classiquement basée sur une comparaison du degré d'enfoncement de la pédale d'accélérateur souhaité par le conducteur et la consigne envoyée par le régulateur. Or, la nécessité de changer de rapport implique de relâcher la pédale d'accélérateur pour appuyer sur la pédale d'embrayage, ce qui conduit à quitter le mode « override » pour repasser en mode de régulation, et donc à ramener la vitesse du véhicule à la valeur programmée par le régulateur, ce qui n'est pas le comportement souhaité par le conducteur, qui à ce moment là veut temporairement reprendre la main sur le régulateur et rester en mode « override ». Ces interactions entre le régulateur et le conducteur durant les changements de rapport provoquent des discontinuités se traduisant par des à coups durant les changements de rapport, au détriment de l'expérience de conduite.

Le document discuté ci-dessus décrit la capacité du régulateur d'entrer en mode « override », lorsque le conducteur appui sur la pédale d'accélérateur pour accélérer temporairement au dessus de la vitesse programmée par le régulateur, mais uniquement dans un cas où le conducteur ne change pas de vitesse. Par contre, dans le mode « override » du régulateur, aucune gestion particulière n'est décrite lorsque le conducteur relâche la pédale d'accélérateur et appuie sur la pédale d'embrayage pour changer de rapport.

Il existe donc un besoin pour mieux gérer les interactions entre le régulateur adaptatif de vitesse et/ou de distance et le conducteur durant les changements de rapport, en particulier dans une phase où le conducteur accélère temporairement au-dessus de la vitesse programmée par le régulateur, puis souhaite effectuer un changement de rapport durant cette phase.

A cette fin, l'invention concerne un procédé de gestion d'un régulateur adaptatif de vitesse et/ou de distance équipant un véhicule automobile à boîte de vitesse manuelle, dans lequel le régulateur comporte au moins deux modes de fonctionnement dont un premier mode de fonctionnement imposant une vitesse de consigne prédéterminée au véhicule et un deuxième mode de fonctionnement autorisant un dépassement temporaire de la vitesse de consigne, la commutation entre l'un et l'autre des premier et deuxième modes de fonctionnement étant fonction d'une comparaison effectuée sur une consigne conducteur représentant directement ou indirectement un couple moteur demandé par un conducteur selon un degré d'enfoncement d'une pédale d'accélérateur du véhicule, par rapport à une consigne régulateur représentant directement ou indirectement un couple moteur correspondant à la vitesse de consigne imposée par le premier mode de fonctionnement, le procédé étant caractérisé en ce que, lorsque le régulateur est commuté dans le deuxième mode de fonctionnement, il comprend les étapes de :
- détecter un début de changement de rapport de boîte de vitesse,
- commander, en réponse à ladite détection, une neutralisation temporaire de la comparaison effectuée sur la consigne conducteur, pour forcer le maintien du régulateur dans le deuxième mode de fonctionnement.

Avantageusement, le maintien du régulateur dans le deuxième mode de fonctionnement est forcé jusqu'à la détection d'une fin du changement de rapport.

Avantageusement, le procédé peut comprendre une étape de maintien temporaire du régulateur dans le deuxième mode de fonctionnement, consécutivement à la détection de la fin du changement de rapport.

De préférence, la durée du maintien temporaire du régulateur dans le deuxième mode de fonctionnement est déterminée par une temporisation, qui est lancée pendant l'étape de détection de la fin du changement de rapport.

Avantageusement, le procédé peut comprendre, à la fin de ladite temporisation, une étape de détermination de la consigne conducteur, le procédé comprenant une étape de maintien additionnel du régulateur dans le deuxième mode de fonctionnement si la consigne conducteur dépasse la consigne régulateur, le procédé comprenant une étape de retour du régulateur dans le premier mode de fonctionnement sinon.

Avantageusement, la durée du maintien additionnel du régulateur dans le deuxième mode de fonctionnement est déterminée par la consigne conducteur, le régulateur étant maintenu dans le deuxième mode de fonctionnement tant que la consigne conducteur dépasse la consigne régulateur, le régulateur retournant dans le premier mode de fonctionnement dès que la consigne conducteur ne dépasse plus la consigne régulateur.

L'invention concerne également un dispositif de gestion d'un régulateur adaptatif de vitesse et/ou de distance d'un véhicule automobile à boîte de vitesse manuelle, comprenant un module de supervision dudit régulateur adapté à contrôler l'activation du régulateur dans au moins deux modes de fonctionnement dont un premier mode de fonctionnement imposant une vitesse de consigne prédéterminée au véhicule et un deuxième mode de fonctionnement autorisant un dépassement temporaire de la vitesse de consigne, le module de supervision du régulateur coopérant avec un module de comparaison d'une consigne conducteur représentant directement ou indirectement un couple moteur demandé par un conducteur selon un degré d'enfoncement d'une pédale d'accélérateur du véhicule, de façon à gérer la commutation entre l'un et l'autre des premier et deuxième modes de fonctionnement en fonction d'une comparaison effectuée sur la consigne conducteur par rapport à une consigne régulateur représentant directement ou indirectement un couple moteur correspondant à la vitesse de consigne imposée par le premier mode de fonctionnement, caractérisé en ce que le module de supervision coopère en outre avec un module de détection d'un début de changement de rapport de vitesse, pour commander, lorsque le régulateur est commuté dans le deuxième mode de fonctionnement et en réponse à une détection d'un début de changement de rapport, une neutralisation temporaire de la comparaison effectuée sur la consigne conducteur, de façon à forcer le maintien du régulateur dans le deuxième mode de fonctionnement.

Avantageusement, le module de supervision est adapté à commander un maintien temporaire du régulateur dans le deuxième mode de fonctionnement, consécutivement à la détection de la fin du changement de rapport.

L'invention concerne encore un véhicule automobile à boîte de vitesse manuelle comprenant un régulateur adaptatif de vitesse et/ou de distance, caractérisé en ce qu'il comprend un dispositif de gestion du régulateur tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
La figure 1 est un schéma synoptique illustrant une vue globale d'un mode de réalisation d'un dispositif selon l'invention de gestion d'un régulateur adaptatif de vitesse d'un véhicule automobile à boîte manuelle, intégrant la fonctionnalité de maintien du mode « override » lors d'un changement de rapport ;
La figure 2 est un organigramme représentant des étapes d'un procédé conforme à l'invention, de gestion du maintien du mode « override » du régulateur lors du changement de rapport.

Dans la suite de la description, l'expression « changement de rapport » désigne de façon générale toute phase de fonctionnement du moteur où ce dernier est déconnecté de sa transmission, que ce soit la conséquence d'un débrayage, autrement dit d'un appui sur la pédale d'embrayage, avec ou sans rapport de vitesse sélectionné, ou au point mort, correspondant à une position neutre du levier de vitesse, autrement dit une situation où aucune vitesse n'est sélectionnée tandis que la pédale d'embrayage est en position haute. Le changement de rapport concerne un changement de rapport montant comme descendant et couvre tous les changements de rapport depuis le deuxième rapport jusqu'au rapport maximum disponible, quel que soit le saut de rapport effectué (par exemple, du deuxième rapport vers le quatrième rapport, du cinquième rapport vers le deuxième rapport, etc.).

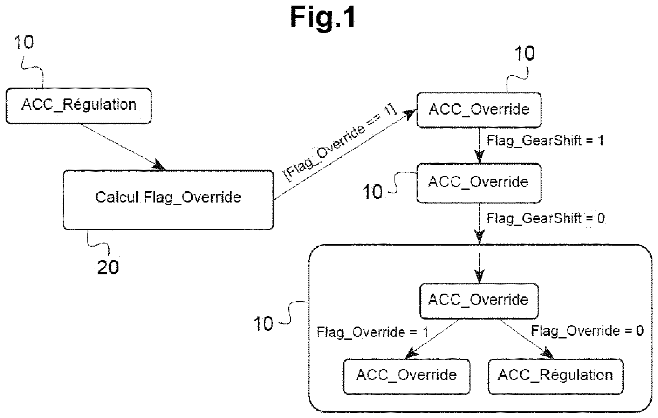

La figure 1 illustre les interactions entre les différentes fonctions du dispositif de gestion du régulateur adaptatif de vitesse d'un véhicule à boîte de vitesse manuelle, lors des changements de rapport de vitesse susceptibles d'intervenir alors que le régulateur fonctionne en mode « override ». Le dispositif comprend un module 10 de supervision du régulateur adaptatif de vitesse et/ou de distance du véhicule. Le régulateur peut être commuté entre différents états gérés par le module de supervision 10. Le régulateur est initialement activé dans un mode de régulation ACC_Régulation, correspondant à un mode de fonctionnement du régulateur dans lequel la régulation de vitesse et/ou de distance est activée, suite à la validation de conditions d'activation. Le régulateur est conçu pour permettre de réguler la vitesse du véhicule dans une boucle de régulation, notamment en fonction d'une consigne de couple moteur.

Le module de supervision 10 du régulateur coopère avec un module de comparaison 20 d'une consigne conducteur représentant directement ou indirectement un couple moteur demandé par un conducteur selon un degré d'enfoncement d'une pédale d'accélérateur du véhicule, par rapport à une consigne régulateur représentant directement ou indirectement un couple moteur correspondant à la vitesse de consigne imposée par le premier mode de fonctionnement ACC_Régulation, de façon à permettre de commuter le régulateur dans un mode de fonctionnement ACC_Override, dit mode « override », en fonction de l'état d'un signal de commutation Flag_Override fourni par le module de comparaison 20.

Selon un premier exemple de réalisation, la consigne conducteur comprend une position réelle de la pédale d'accélérateur ou un degré d'enfoncement réel par le conducteur de ladite pédale d'accélérateur. La consigne régulateur comprend une position virtuelle de la pédale d'accélérateur ou un degré d'enfoncement virtuel reflétant la vitesse de consigne imposée par la régulation.

Le module de comparaison 20 est conçu pour recevoir la position réelle de la pédale d'accélérateur ou un degré d'enfoncement de la pédale d'accélérateur et pour comparer cette position réelle ou ce degré d'enfoncement respectivement avec la position virtuelle ou le degré d'enfoncement virtuel reflétant la vitesse de consigne imposée par la régulation. Lorsque la position réelle de la pédale correspond à un enfoncement de pédale dépassant la position virtuelle, le signal Flag_Override fourni par le module de comparaison 20 passe à l'état binaire « 1 ».

Selon un deuxième exemple de réalisation, la consigne conducteur comprend un couple moteur conducteur reflétant le couple moteur demandé par le conducteur selon la position réelle de la pédale d'accélérateur ou le degré d'enfoncement par le conducteur de ladite pédale d'accélérateur. La consigne régulateur comprend un couple moteur régulateur correspondant à la vitesse de consigne imposée par la régulation.

Le module de comparaison 20 est conçu pour recevoir directement le couple moteur conducteur et le couple moteur régulateur et les comparer. Lorsque le couple moteur conducteur dépasse le couple moteur régulateur, le signal Flag_Override fourni par le module de comparaison 20 passe à l'état binaire « 1 ».

Selon un troisième exemple de réalisation, la consigne conducteur comprend une consolidation de la position réelle de la pédale d'accélérateur ou du degré d'enfoncement par le conducteur de ladite pédale d'accélérateur, avec le couple moteur conducteur. La consigne régulateur comprend la consolidation de la position virtuelle de la pédale d'accélérateur ou du degré d'enfoncement virtuel reflétant la vitesse de consigne imposée par la régulation, avec le couple moteur régulateur.

Le module de comparaison 20 est conçu pour recevoir et consolider la position réelle de la pédale d'accélérateur ou le degré d'enfoncement par le conducteur de ladite pédale d'accélérateur, avec le couple moteur conducteur. Le module de comparaison 20 est conçu pour recevoir et consolider la position virtuelle de la pédale d'accélérateur ou le degré d'enfoncement virtuel reflétant la vitesse de consigne imposée par la régulation, avec le couple moteur régulateur.

La consolidation comprend par exemple une combinaison logique telle qu'un « OU » logique, ou telle qu'un « ET » logique. Cela permet de robustifier la comparaison entre la consigne conducteur et la consigne régulateur et d'éviter des passages intempestifs du signal Flag_Override à l'état binaire « 1 » ou « 0 ».

La description qui suit est basée sur le premier exemple de réalisation, mais est applicable par analogie aux deuxième et troisième exemples de réalisation.

Au changement d'état de ce signal Flag_Override, le module 10 de supervision est conçu pour commuter le régulateur dans l'état « override », correspondant à un mode de fonctionnement du régulateur dans lequel le dépassement de la vitesse de consigne est temporairement autorisé. Autrement dit, la régulation est suspendue pour laisser temporairement la possibilité au conducteur d'accélérer au-delà de la vitesse de consigne imposée par la régulation, pour effectuer un dépassement par exemple.

Conformément à l'invention, lorsque le régulateur est activé en mode « override » et lorsqu'un changement de rapport de vitesse est détecté, le module 10 de supervision du régulateur est conçu pour maintenir le mode de fonctionnement «override» du régulateur. Autrement dit, le module 10 de supervision est conçu pour gérer la non déconnexion du régulateur lors d'un changement de rapport et ainsi maintenir, lors du changement de rapport, la régulation activée, en l'occurrence ici dans le mode de fonctionnement « override ».

Un module de détection d'un changement de rapport, non représenté, est conçu pour recevoir un signal de position de la pédale d'embrayage et détecter un début de changement de rapport de vitesse en fonction de ce signal de position. Le module de détection de changement de rapport est ainsi prévu pour fournir un signal de détection Flag_GearShift d'un début de changement de rapport lorsque le conducteur appuie sur la pédale d'embrayage et que le mode de régulation « override » du régulateur adaptatif de vitesse est activé. Par exemple le signal Flag_GearShift passe à l'état « 1 » pour signaler le début d'un changement de rapport de vitesse et repasse à l'état « 0 » pour signaler la fin du changement d rapport de vitesse

L'appui sur la pédale d'embrayage du véhicule est par exemple défini par l'état d'un capteur binaire de position lié à cette pédale. Le signal obtenu par le capteur binaire positionné sur la pédale d'embrayage est un signal indiquant soit l'état embrayé, soit l'état débrayé de la pédale.

Un début de changement de rapport de vitesse est détecté lorsque la régulation de vitesse et/ou de distance en mode « override » est activée et que le signal du capteur de position de la pédale d'embrayage indique un appui sur la pédale d'embraye.

Une détection de début de course de la pédale d'embrayage correspondant à un appui sur la pédale d'embrayage permet d'agir au plus tôt. Le signal du capteur de position de la pédale peut être configuré pour indiquer un appui sur la pédale d'embrayage en fonction d'une valeur courante d'enfoncement de la pédale d'embrayage et d'une valeur de seuil prédéterminée pour l'enfoncement de la pédale d'embrayage.

On a vu plus haut que l'activation du régulateur en mode de fonctionnement « override » résulte de la comparaison entre la consigne conducteur et la consigne régulateur, définies respectivement, suivant le premier exemple de réalisation, par la position réelle de la pédale d'accélérateur ou un degré d'enfoncement réel de la pédale d'accélérateur et la position virtuelle ou le degré d'enfoncement virtuel reflétant la vitesse de consigne imposée par la régulation. Lors du changement de rapport, le fait de relâcher complètement la pédale d'accélérateur devrait normalement entraîner le retour du régulateur du mode « override » vers le mode nominal de régulation. Autrement dit, lors du changement de rapport, l'accélération temporaire souhaitée par le conducteur n'est plus prise en compte et le module de supervision du régulateur impose un retour dans le mode de régulation ACC_Régulation. Le véhicule tend alors à décélérer jusqu'à la vitesse de consigne initiale, provoquant ainsi un comportement non souhaité par le conducteur et potentiellement dangereux. Le système de régulation peut alors être perçu comme présentant un défaut de fonctionnement ou gérant mal les interactions avec le conducteur.

Pour permettre au conducteur d'accélérer temporairement au-dessus de la vitesse de consigne imposée par la régulation, tout en autorisant un changement de rapport, la comparaison effectuée sur le degré d'enfoncement réel de la pédale d'accélérateur, utilisée par la régulation, est provisoirement neutralisée au moment de la détection d'un changement de rapport, pour forcer le maintien du régulateur dans le mode « override ». Ainsi, grâce à cette fonction de maintien du mode « override », le conducteur peut entreprendre par exemple un dépassement d'un véhicule cible avec une vitesse courante supérieure à la vitesse de consigne imposée par la régulation, sachant que cette vitesse courante nécessite un changement de rapport, sans désactiver pour autant le mode « override ». Ainsi, si durant le dépassement, le conducteur décide d'effectuer un changement de rapport, la neutralisation provisoire de la comparaison effectuée sur le degré d'enfoncement réel de la pédale d'accélérateur permet de maintenir le mode « override » et le dépassement peut se poursuivre sans retour au mode nominal de régulation lors du changement de rapport. La fonction de maintien du mode « override » permet d'assurer une bonne interaction entre le conducteur et le régulateur, en évitant toute discontinuité de la régulation. En particulier, lors d'un dépassement avec changement de rapport de vitesse, le maintien du mode « override » permet d'éviter le retour à la vitesse de consigne, inférieure à la vitesse courante de dépassement, alors que le conducteur souhaite maintenir cette vitesse courante pour continuer le dépassement.

La comparaison effectuée entre la consigne conducteur et la consigne régulateur est neutralisée jusqu'à la détection de la fin du changement de rapport. La fin du changement de rapport est détectée lorsque l'état embrayé de la pédale, autrement dit un état complètement relâché de la pédale d'embrayage, est indiqué par le signal du capteur de position de la pédale d'embrayage. La détection de la fin du changement de rapport peut comprendre la détection d'une séquence de positions de la pédale d'embraye comportant un passage de la pédale d'embrayage par une position basse, puis par une position haute. Le changement de rapport est considéré terminé lorsque l'état embrayé de la pédale est détecté, sans être au point mort, et que le régime moteur, c'est-à-dire sa vitesse de rotation, est stabilisé.

A la suite de la détection de la fin du changement de rapport, le module 10 de supervision du régulateur va commander l'inhibition de la fonction de maintien du mode « override » précédemment activée suite à la détection du changement de rapport. Plus précisément, une fois la manœuvre effectuée, l'inhibition de la fonction de maintien du mode « override » consiste à maintenir temporairement le régulateur dans le mode « override » et la durée de maintien temporaire du régulateur dans ce mode est déterminée par une temporisation. Cette temporisation permet de laisser le temps au conducteur de ré-accélérer au cours de cette temporisation, s'il le souhaite, pour permettre au régulateur de rester en mode « override ». Si la temporisation prend fin et que le conducteur n'a pas ré-accéléré, le régulateur retourne dans le mode nominal de régulation dans lequel la vitesse du véhicule est régulée à la vitesse de consigne prédéterminée. Le régulateur demeure ainsi actif durant toute la durée du changement de rapport.

Durant le maintien temporaire du régulateur dans le mode « override », la détermination de la position réelle de la pédale d'accélérateur ou du degré d'enfoncement réel de la pédale d'accélérateur par rapport à la position virtuelle ou au degré d'enfoncement virtuel reflétant la vitesse de consigne imposée par la régulation, est à nouveau prise en compte par la boucle de régulation.

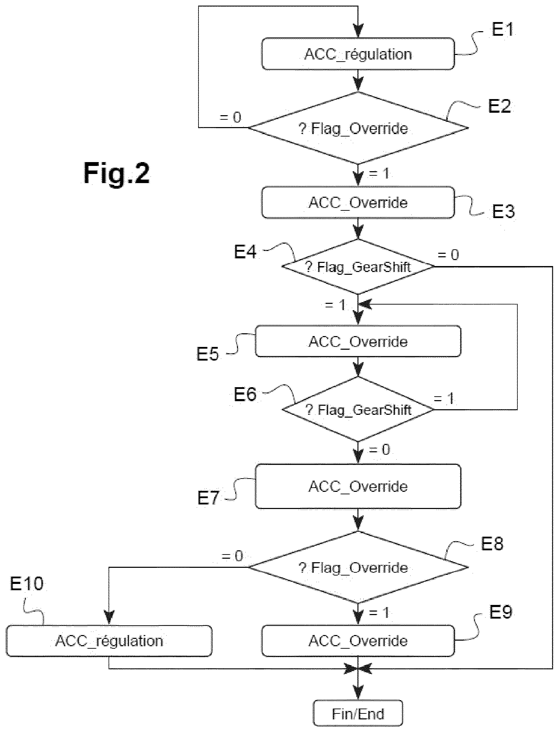

La figure 2 illustre le principe du maintien du mode « override » du régulateur en cas de changement de rapport de vitesse et de maintien temporaire de cette fonction à la fin du changement de rapport. Le procédé comprend une étape de démarrage E1, dans laquelle le régulateur adaptatif de vitesse et/ou de distance est activé en régulation, c'est-à-dire qu'il est commuté dans un mode de fonctionnement, dit mode nominal de régulation ACC_régulation, où la vitesse du véhicule est régulée à une vitesse de consigne, notamment en fonction d'une consigne de couple moteur.

Une fois la régulation activée, si, dans une étape E2, on détecte un appui sur la pédale d'accélérateur et que la comparaison entre la consigne conducteur et la consigne régulateur entraîne le passage à l'état binaire « 1 » du signal Flag_Override comme expliqué plus haut en référence à la figure 1, on passe dans une étape E3, dans laquelle le mode « override » du régulateur est activé. Sinon, on reste en mode ACC_régulation.

En mode « override », une étape E4 de détection d'un changement de rapport est mise en œuvre. Dans l'étape E4 de détection d'un changement de rapport, si un début de changement de rapport est détecté selon les principes exposés plus haut en référence à la figure 1, le signal Flag_GearShift fourni par le module de détection passe à l'état binaire « 1 » et on passe dans une étape E5 de maintien du mode « override ». Autrement dit, la régulation est maintenue, mais on neutralise la comparaison effectuée entre la consigne conducteur et la consigne régulateur, de sorte à maintenir le mode « override », malgré le relâchement de la pédale d'accélérateur intervenant au moment de l'appui sur la pédale d'embrayage pour changer de rapport de vitesse. La fonction de maintien du mode « override » étant activée, le conducteur est autorisé à accélérer au-dessus de la vitesse de consigne lors du changement de rapport. La fonction de maintien du mode « override » reste activée tant que le changement de rapport est en cours.

Lorsqu'on détecte la fin du changement de rapport dans une étape E6, indiqué par un changement d'état du signal Flag_GearShift, on passe dans une étape E7, dans laquelle le régulateur va être maintenu temporairement dans le mode « override ». La durée de maintien temporaire du régulateur dans le mode « override » est déterminée par une temporisation, qui est lancée pendant l'étape E6. Ainsi, la détection de la fin du changement de rapport est associée à une temporisation. Cette temporisation permet de laisser la possibilité au conducteur de ré-accélérer s'il le souhaite ou de reprendre la régulation avec la vitesse de consigne.

Ainsi, au cours de cette temporisation, si, dans une étape E8, le calcul du signal Flag_Override résultant de la comparaison entre la consigne conducteur et la consigne régulateur montre que le conducteur ré-accélère à la fin du changement de rapport, le régulateur reste en mode « override » à l'étape E9. La durée de ce maintien additionnel du régulateur en mode « override » est déterminée par la consigne conducteur. Ainsi, le régulateur est maintenu dans le mode « override » tant que la consigne conducteur dépasse la consigne régulateur et le régulateur retourne dans le mode de régulation dès que la consigne conducteur ne dépasse plus la consigne régulateur.

Si la temporisation prend fin sans détection des conditions d'« override », le régulateur est commuté en mode de régulation à l'étape E10.

Le procédé de l'invention est aussi applicable au maintien du mode « override » dans le cas où le conducteur effectue un double débrayage pendant le changement de rapport. Le double débrayage est en effet une technique ayant pour but de régler la vitesse de rotation des engrenages de la boîte de vitesse concernés par le rapport de vitesse que l'on s'apprête à engager. Cette technique consiste à lâcher l'accélérateur, débrayer et désengager le rapport en cours, puis, en position point mort, embrayer et accélérer le moteur à la vitesse souhaitée, correspondant à la vitesse de rotation du moteur à laquelle il sera avec le nouveau rapport que l'on s'apprête à engager, puis débrayer à nouveau et engager le nouveau rapport et enfin, embrayer avec le nouveau rapport engagé. Aussi, dans ce contexte de double débrayage, le mode « override » est maintenu si le conducteur appuie sur la pédale d'accélérateur durant le changement de rapport.

## Revendications

1. Procédé de gestion d'un régulateur adaptatif de vitesse et/ou de distance équipant un véhicule automobile à boîte de vitesse manuelle, dans lequel le régulateur comporte au moins deux modes de fonctionnement dont un premier mode de fonctionnement (ACC_régulation) imposant une vitesse de consigne prédéterminée au véhicule et un deuxième mode de fonctionnement (ACC_Override) autorisant un dépassement temporaire de la vitesse de consigne, la commutation entre l'un et l'autre des premier et deuxième modes de fonctionnement étant fonction d'une comparaison (E2) effectuée sur une consigne conducteur représentant directement ou indirectement un couple moteur demandé par un conducteur selon un degré d'enfoncement d'une pédale d'accélérateur du véhicule, par rapport à une consigne régulateur représentant directement ou indirectement un couple moteur correspondant à la vitesse de consigne imposée par le premier mode de fonctionnement, dans lequel, lorsque le régulateur est commuté (E3) dans le deuxième mode de fonctionnement, il comprend les étapes de :
- détecter (E4) un début de changement de rapport de boîte de vitesse,
- commander (E5), en réponse à ladite détection, une neutralisation temporaire de la comparaison effectuée sur la consigne conducteur, pour forcer le maintien du régulateur dans le deuxième mode de fonctionnement.

2. Procédé selon la revendication 1, **caractérisé en ce que** le maintien du régulateur dans le deuxième mode de fonctionnement est forcé jusqu'à la détection (E6) d'une fin du changement de rapport.

3. Procédé selon la revendication 2, **caractérisé en ce qu'**il comprend une étape (E7) de maintien temporaire du régulateur dans le deuxième mode de fonctionnement, consécutivement à la détection de la fin du changement de rapport.

4. Procédé selon la revendication 3, **caractérisé en ce que** la durée du maintien temporaire du régulateur dans le deuxième mode de fonctionnement est déterminée par une temporisation, qui est lancée pendant l'étape (E6) de détection de la fin du changement de rapport.

5. Procédé selon la revendication 4, **caractérisé en ce qu'**à la fin de ladite temporisation, il comprend une étape de détermination de la consigne conducteur, le procédé comprenant une étape de maintien additionnel du régulateur dans le deuxième mode de fonctionnement si la consigne conducteur dépasse la consigne régulateur, le procédé comprenant une étape de retour du régulateur dans le premier mode de fonctionnement sinon.

6. Procédé selon la revendication 5, **caractérisé en ce que** la durée du maintien additionnel du régulateur dans le deuxième mode de fonctionnement est déterminée par la consigne conducteur, le régulateur étant maintenu dans le deuxième mode de fonctionnement tant que la consigne conducteur dépasse la consigne régulateur, le régulateur retournant dans le premier mode de fonctionnement dès que la consigne conducteur ne dépasse plus la consigne régulateur.

7. Dispositif de gestion d'un régulateur adaptatif de vitesse et/ou de distance d'un véhicule automobile à boîte de vitesse manuelle, comprenant un module de supervision (10) dudit régulateur adapté à contrôler l'activation du régulateur dans au moins deux modes de fonctionnement dont un premier mode de fonctionnement imposant une vitesse de consigne prédéterminée au véhicule et un deuxième mode de fonctionnement autorisant un dépassement temporaire de la vitesse de consigne, le module de supervision du régulateur coopérant avec un module de comparaison (20) d'une consigne conducteur représentant directement ou indirectement un couple moteur demandé par un conducteur selon un degré d'enfoncement d'une pédale d'accélérateur du véhicule, de façon à gérer la commutation entre l'un et l'autre des premier et deuxième modes de fonctionnement en fonction d'une comparaison effectuée sur la consigne conducteur par rapport à une consigne régulateur représentant directement ou indirectement un couple moteur correspondant à la vitesse de consigne imposée par le premier mode de fonctionnement, dans lequel le module de supervision (10) coopère en outre avec un module de détection d'un début de changement de rapport de vitesse, pour commander, lorsque le régulateur est commuté dans le deuxième mode de fonctionnement et en réponse à une détection d'un début de changement de rapport, une neutralisation temporaire de la comparaison effectuée sur la consigne conducteur, de façon à forcer le maintien du régulateur dans le deuxième mode de fonctionnement.

8. Dispositif selon la revendication 7, **caractérisé en ce que** le module de supervision est adapté à commander un maintien temporaire du régulateur dans le deuxième mode de fonctionnement, consécutivement à la détection de la fin du changement de rapport.

9. Véhicule automobile à boîte de vitesse manuelle comprenant un régulateur adaptatif de vitesse et/ou de distance, **caractérisé en ce qu'**il comprend un dispositif de gestion du régulateur selon la revendication 7 ou 8.

## Patentansprüche

1. Verfahren zum Verwalten eines adaptiven Geschwindigkeits- und/oder Abstandsreglers, mit dem ein Kraftfahrzeug mit Handschaltgetriebe ausgestattet ist, bei dem der Regler mindestens zwei Betriebsmodi aufweist, darunter einen ersten Betriebsmodus (ACC_Regelung), der dem Fahrzeug eine vorherbestimmte Sollgeschwindigkeit vorschreibt, und einen zweiten Betriebsmodus (ACC_Override), der ein vorübergehendes Überschreiten der Sollgeschwindigkeit erlaubt, wobei das Umschalten zwischen dem einen und dem anderen des ersten und zweiten Betriebsmodus abhängig von einem Vergleich (E2) ist, der an einem Fahrersollwert durchgeführt wird, der direkt oder indirekt ein von einem Fahrer gemäß einem Grad des Niederdrückens eines Gaspedals des Fahrzeugs gefordertes Drehmoment darstellt, in Bezug auf einen Reglersollwert, der direkt oder indirekt ein Motordrehmoment darstellt, das der durch den ersten Betriebsmodus vorgeschriebenen Solldrehzahl entspricht, wobei, wenn der Regler in den zweiten Betriebsmodus geschaltet wird (E3), dieser die folgenden Schritte aufweist:
- Erkennen (E4) des Beginns eines Getriebegangwechsels,
- Steuern (E5), als Reaktion auf diese Erkennung, einer vorübergehenden Neutralisierung des an dem Fahrersollwert durchgeführten Vergleichs, um die Beibehaltung des Reglers im zweiten Betriebsmodus zu erzwingen.

2. Verfahren nach Anspruch 1, **dadurch gekennzeichnet, dass** die Beibehaltung des Reglers im zweiten Betriebsmodus bis zur Erkennung (E6) eines Endes des Gangwechsels erzwungen wird.

3. Verfahren nach Anspruch 2, **dadurch gekennzeichnet, dass** es einen Schritt (E7) zur vorübergehenden Beibehaltung des Reglers im zweiten Betriebsmodus nach der Erkennung des Endes des Gangwechsels aufweist.

4. Verfahren nach Anspruch 3, **dadurch gekennzeichnet, dass** die Dauer der vorübergehenden Beibehaltung des Reglers im zweiten Betriebsmodus durch eine Zeitverzögerung bestimmt wird, die während des Schritts (E6) zur Erkennung des Endes des Gangwechsels gestartet wird.

5. Verfahren nach Anspruch 4, **dadurch gekennzeichnet, dass** es am Ende der Zeitverzögerung einen Schritt zum Bestimmen des Fahrersollwerts aufweist, wobei das Verfahren einen Schritt zum zusätzlichen Halten des Reglers im zweiten Betriebsmodus aufweist, wenn der Fahrersollwert den Reglersollwert überschreitet, wobei das Verfahren andernfalls einen Schritt zum Rückführen des Reglers in den ersten Betriebsmodus aufweist.

6. Verfahren nach Anspruch 5, **dadurch gekennzeichnet, dass** die Dauer des zusätzlichen Haltens des Reglers im zweiten Betriebsmodus durch den Fahrersollwert bestimmt wird, wobei der Regler im zweiten Betriebsmodus gehalten wird, solange der Fahrersollwert den Reglersollwert übersteigt, wobei der Regler in den ersten Betriebsmodus zurückkehrt, sobald der Fahrersollwert den Reglersollwert nicht mehr übersteigt.

7. Vorrichtung zum Verwalten eines adaptiven Geschwindigkeits- und/oder Abstandsreglers eines Kraftfahrzeugs mit Handschaltgetriebe, die ein Überwachungsmodul (10) des Reglers aufweist, das ausgeführt ist, um die Aktivierung des Reglers in mindestens zwei Betriebsmodi zu steuern, darunter einen ersten Betriebsmodus, der dem Fahrzeug eine vorherbestimmte Sollgeschwindigkeit vorschreibt, und einen zweiten Betriebsmodus, der ein vorübergehendes Überschreiten der Sollgeschwindigkeit erlaubt, wobei das Überwachungsmodul des Reglers mit einem Vergleichsmodul (20) für einen Fahrersollwert zusammenarbeitet, der direkt oder indirekt ein von einem Fahrer gemäß einem Grad des Niederdrückens eines Gaspedals des Fahrzeugs gefordertes Drehmoment darstellt, um das Umschalten zwischen dem einen und dem anderen des ersten und zweiten Betriebsmodus in Abhängigkeit von einem Vergleich zu verwalten, der an einem Fahrersollwert in Bezug auf einen Reglersollwert, der direkt oder indirekt ein Motordrehmoment darstellt, das der durch den ersten Betriebsmodus vorgeschriebenen Solldrehzahl entspricht, durchgeführt wird, wobei das Überwachungsmodul (10) unter anderem mit einem Modul zum Erkennen eines Beginns eines Getriebegangwechsels zusammenarbeitet, um, wenn der Regler in den zweiten Betriebsmodus geschaltet wird und als Reaktion auf ein Erkennen eines Beginns eines Getriebegangwechsels, eine vorübergehende Neutralisierung des an dem Fahrersollwert durchgeführten Vergleichs zu steuern, um die Beibehaltung des Reglers im zweiten Betriebsmodus zu erzwingen.

8. Vorrichtung nach Anspruch 7, **dadurch gekennzeichnet, dass** das Überwachungsmodul ausgeführt ist, um eine vorübergehende Beibehaltung des Reglers im zweiten Betriebsmodus nach der Erkennung des Endes des Gangwechsels zu steuern.

9. Kraftfahrzeug mit Handschaltgetriebe, das einen adaptiven Geschwindigkeits- und/oder Abstandsregler aufweist, **dadurch gekennzeichnet, dass** es eine Vorrichtung zum Verwalten des Reglers gemäß Anspruch 7 oder 8 aufweist.

## Claims

1. Method for managing a speed-regulating and/or distance-regulating adaptive cruise control with which a motor vehicle with a manual gearbox is equipped, in which method the cruise control comprises at least two modes of operation including a first mode of operation (ACC_regulation) that imposes a predetermined setpoint speed on the vehicle, and a second mode of operation (ACC_Override) that allows the setpoint speed to be temporarily exceeded, the switchover between the first and second modes of operation being dependent on a comparison (E2) made on a driver setpoint that directly or indirectly represents an engine torque demanded by a driver according to an extent to which an accelerator pedal of the vehicle is depressed, against a cruise control setpoint that directly or indirectly represents an engine torque corresponding to the setpoint speed imposed by the first mode of operation, wherein, when the cruise control is switched over (E3) into the second mode of operation, the method comprises the steps of:
- detecting (E4) a start of a gearbox gearshift,
- commanding (E5), in response to said detection, a temporary neutralization of the comparison made on the driver setpoint in order to force the cruise control to remain in the second mode of operation.

2. Method according to Claim 1, **characterized in that** the cruise control is forced to remain in the second mode of operation until an end of gearshift is detected (E6).

3. Method according to Claim 2, **characterized in that** it comprises a step (E7) of temporarily keeping the cruise control in the second mode of operation following the detection of the end of the gearshift.

4. Method according to Claim 3, **characterized in that** the duration of the time for which the cruise control is temporarily kept in the second mode of operation is determined by a timer, which is started during the step (E6) of detecting the end of the gearshift.

5. Method according to Claim 4, **characterized in that**, at the end of said timed period, it comprises a step of determining the driver setpoint, the method comprising a step of additionally keeping the cruise control in the second mode of operation if the driver setpoint exceeds the cruise control setpoint, the method comprising a step of returning the cruise control to the first mode of operation if not.

6. Method according to Claim 5, **characterized in that** the duration of the period of time for which the cruise control is additionally kept in the second mode of operation is determined by the driver setpoint, the cruise control being kept in the second mode of operation for as long as the driver setpoint exceeds the cruise control setpoint, the cruise control returning to the first mode of operation as soon as the driver setpoint no longer exceeds the cruise control setpoint.

7. Device for managing a speed-regulating and/or distance-regulating adaptive cruise control of a motor vehicle with a manual gearbox, comprising a supervision module (10) supervising said cruise control and designed to control the activation of the cruise control in at least two modes of operation including a first mode of operation that imposes a predetermined setpoint speed on the vehicle and a second mode of operation that allows the setpoint speed to be temporarily exceeded, the cruise control supervision module collaborating with a comparison module (20) that compares a driver setpoint that directly or indirectly represents an engine torque demanded by a driver according to an extent to which an accelerator pedal of the vehicle is depressed, so as to manage the switchover between the first and second modes of operation according to a comparison made on the driver setpoint against a cruise control setpoint that directly or indirectly represents an engine torque corresponding to the setpoint speed imposed by the first mode of operation, wherein the supervision module (10) further collaborates with a detection module detecting a start of a gearshift so that when the cruise control is switched over into the second mode of operation and in response to the detection of a start of the gearshift, it commands a temporary neutralization of the comparison made on the driver setpoint so as to force the cruise control to remain in the second mode of operation.

8. Device according to Claim 7, **characterized in that** the supervision module is designed to command the temporary keeping of the cruise control in the second mode of operation following the detection of the end of the gearshift.

9. Motor vehicle with a manual gearbox comprising a speed-regulating and/or distance-regulating adaptive cruise control, **characterized in that** it comprises a cruise control management device according to Claim 7 or 8.
